# EUROPEAN PATENT APPLICATION

(11) **EP 1 384 880 A2**
(43) Date of publication of application: **28.01.2004**
(21) Application number: 03076682.8
(22) Date of filing: 30.05.2003
(51) Int. Cl.: F02M 31/18

(54) **Non-contacting fuel vaporizer**

(30) Priority: 24.07.2002 US 390963
(71) Applicant: Delphi Technologies, Inc., Troy, MI 48007 (US)
(72) Inventor: Mieney, Harry R., Byron, NY 14422 (US); Faville, Michael T., Genesea, NY 1445 (US); Yax, Michael J., Rochester,NY 14626 (US)
(74) Representative: Denton, Michael John

(57) **Abstract**

A non-contact fuel vaporizer (10) adds heat to the injected fuel by combining the fuel with heated air in a vaporization chamber (12) downstream of air supply inlets (30). The fuel is metered axially through a conventional fuel injector (18). The heated air is metered through an air director plate (24) that introduces the air in a helical trajectory concentrically around the injector spray. When the hot swirling air comes in contact with the atomized fuel, substantially all of the fuel is vaporized before coming into contact with a wall (14) of the vaporization chamber (12).

## Description

### TECHNICAL FIELD

The present invention relates to an apparatus for vaporizing injected fuel; more particularly, to an apparatus for vaporizing fuel injected into a high-temperature region such as exists in a hydrocarbon reformer or an internal combustion engine; and most particularly, to a fuel vaporizing system wherein injected fuel is introduced into a vortex of heated air to both heat the fuel and prevent it from contacting with the apparatus prior to vaporization thereof.

This invention was made with government support under DAAE07-00-3-0004 awarded by TACOM. The Government has license rights in this invention.

### BACKGROUND OF THE INVENTION

It is well known to inject fuel into internal combustion engines and hydrocarbon reformers. Typically, fuel is introduced as a conical, atomized spray, the objective being to disperse and vaporize the fuel as rapidly as possible such that combustion or catalysis takes place in the presence of fuel vapor rather than liquid fuel.

A known means of achieving this goal is to impinge the fuel against a hot surface (contact vaporization) such as a wall of the vaporization chamber. A drawback of contact vaporization, however, is that rapid introduction of cold fuel onto a hot surface can cause the liquid droplets to bounce off without vaporizing, known in the art as the Liedenfrost phenomenon. Further, droplets which do adhere to a hot surface may decompose by pyrolysis rather than vaporizing, causing buildup of tars and coke and resulting in reduced fuel economy.

It is a principal object of the present invention to vaporize injected fuel in a hydrocarbon reformer or an internal combustion engine while preventing the fuel from striking a hot surface (non-contact vaporization).

It is a further object of the invention to prevent buildup of fuel decomposition products in a hydrocarbon reformer or an internal combustion engine.

It is a still further object of the invention to increase fuel usage efficiency in such devices.

### SUMMARY OF THE INVENTION

Briefly described, a non-contact fuel vaporization system in accordance with the invention adds heat to the fuel by combining the fuel with heated air in a mixing/vaporization chamber downstream of fuel and air supply inlets. The fuel is metered as an axial spray through a fuel injector and the air is metered through an air director plate that introduces the air in a helical trajectory concentrically around the injected fuel spray. When the hot swirling air comes in contact with the atomized fuel, substantially all of the fuel is vaporized before coming into contact with a wall of the mixing chamber.

### BRIEF DESCRIPTION OF THE DRAWINGS

These and other features and advantages of the invention will be more fully understood and appreciated from the following description of certain exemplary embodiments of the invention taken together with the accompanying drawings, in which:
FIG. 1 is a schematic cross-sectional view of a first embodiment of a non-contact vaporizer in accordance with the invention comprising a fuel injector, an air director plate, and vaporization chamber;
FIG.2 is a plan view of the air director plate shown in FIG. 1;
FIG. 3 is a cross-sectional view of the director plate shown in FIG. 2, showing an angled air injection passage;
FIG. 4 is an exploded isometric view, taken from a first direction, of fuel vaporization apparatus in accordance with the invention for use with a hydrocarbon fuel reformer;
FIG. 5 is an exploded isometric view of the apparatus shown in FIG. 4, taken from a second direction;
FIG. 6 is an exploded view like that shown in FIG. 5, showing the addition of metering means for providing heated air to the vaporization chamber in accordance with the invention;
FIG. 7 is an assembled view of the apparatus shown in FIG. 6;
FIG. 8 is a is a schematic cross-sectional view of a second embodiment of a non-contacting vaporizer in accordance with the invention; and
FIG. 9 is a plan view of the air director plate shown in FIG. 8.

### DESCRIPTION OF THE PREFERRED EMBODIMENTS

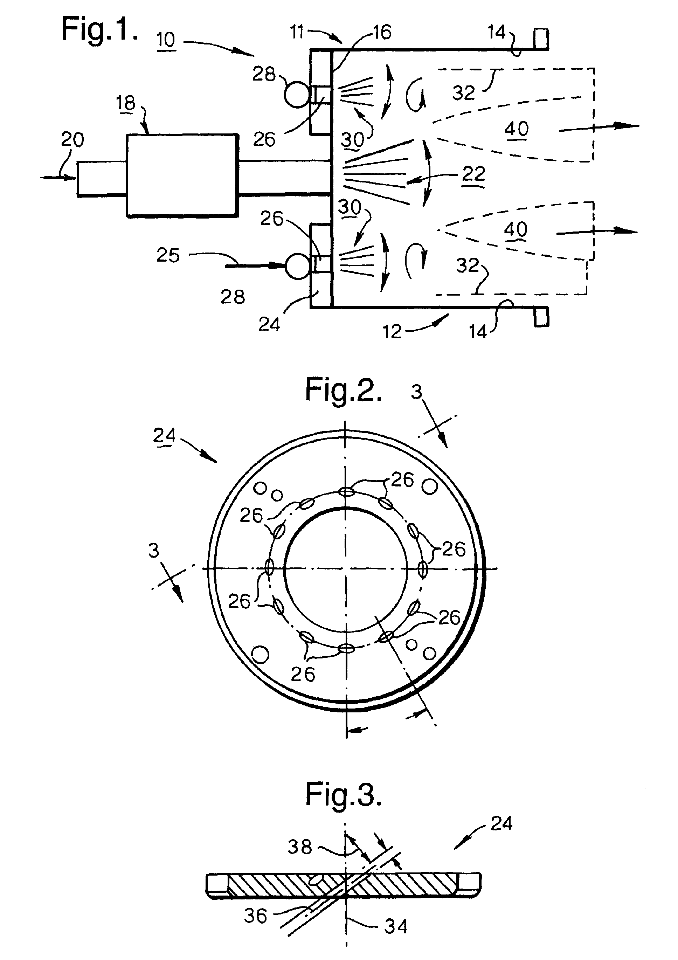

Referring to FIGS. 1 through 3, a non-contacting fuel vaporizer 10 in accordance with the invention includes a housing 11 enclosing a vaporization chamber 12, preferably cylindrical, having side walls 14 and a transverse end wall 16. Fuel injecting and atomization means 18, for example, an automotive fuel injector, is disposed axially through end wall 16 for receiving fuel 20 from a source and controllably dispensing the fuel in known fashion as pulses of an atomized and preferably conical spray 22 into chamber 12. Mounted adjacent end wall 16, and preferably including end wall 16 as described below, is a gas director plate 24 having a plurality of passages 26 therethrough for receiving a gas 25, for example, air or steam, from an adjacent annular manifold 28 and injecting such gas into chamber 12 in a plurality of gas jets 30 which join to form a generally cylindrical gas curtain 32 surrounding fuel spray 22. Fuel spray 22 is thus desirably shielded by curtain 32 from coming into contact with walls 14.

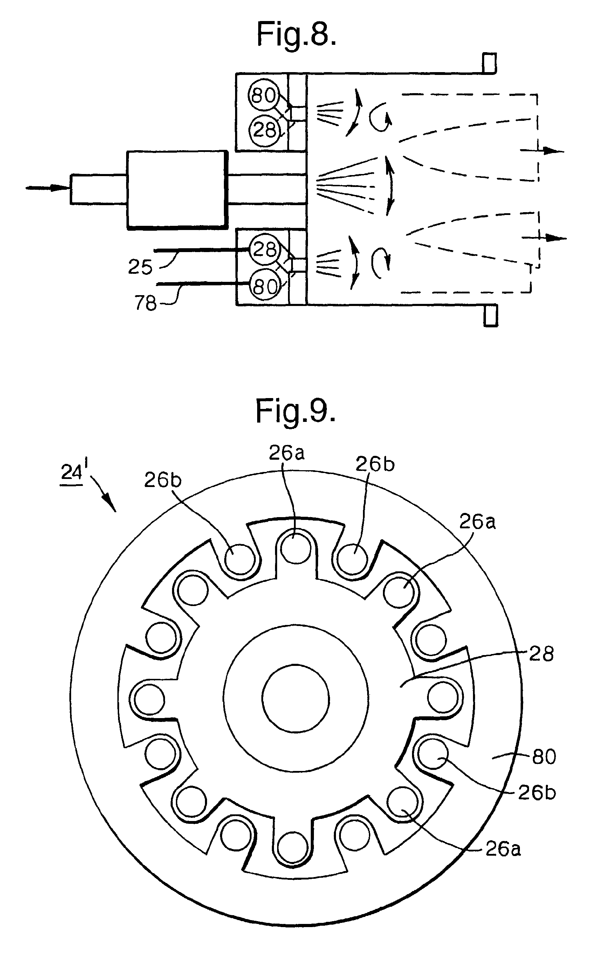

The number of passages 26 may be varied as desired, although plates having between twelve and sixteen such passages have been found to provide excellent shielding; first embodiment plate 24 in FIG. 2 is shown as having twelve passages 26, whereas second embodiment plate 24' in FIG. 9 is shown as having sixteen passages 26, for reasons discussed below.

In currently preferred embodiments of gas director plate 24, passages 26 are evenly distributed at equal radii and equal central angle spacing about axis 34 of plate 24. Further, each passage axis 36 preferably is inclined to plate axis 24 by an angle 38 (FIG.3), for example, 60°, such that curtain 32 is caused to swirl helically as it flows through chamber 12, causing the injected gas 30 to entrain and mix rapidly with the atomized fuel 22 in an intense, generally annular, mixing zone 40.

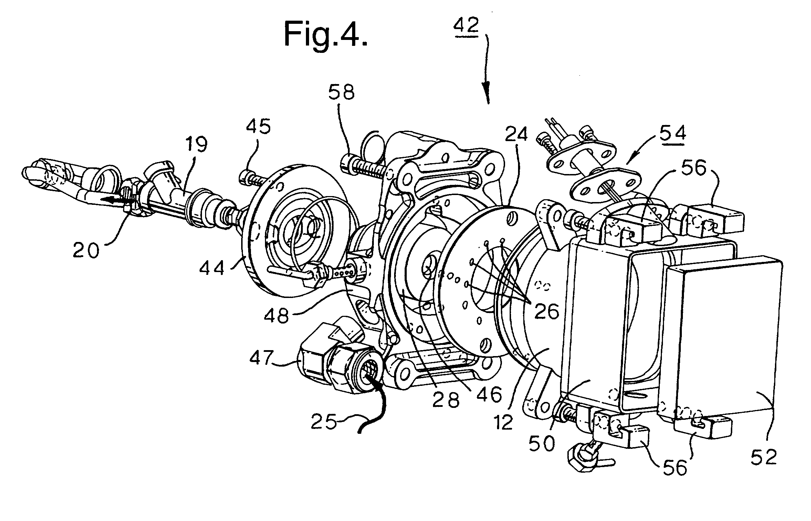

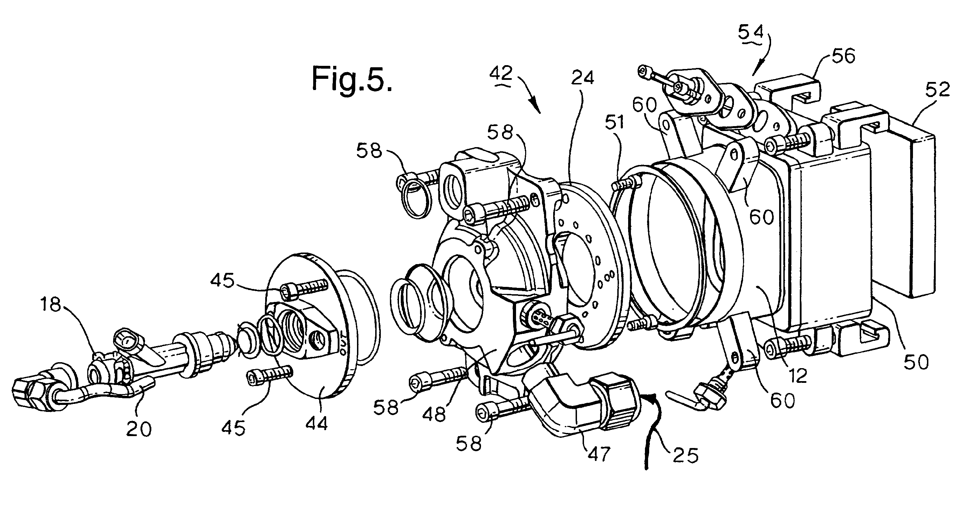

Referring to FIGS. 4 and 5, the elements of non-contact fuel vaporizer 10 are incorporated in a hydrocarbon fuel vaporization assembly 42 for supplying a vaporized fuel/air mixture to a fuel combustor such as a hydrocarbon reformer (not shown). Atomizing means, such as fuel injector 19 is received by a coolant jacket base 44 for injecting fuel through a central opening 46 in a manifold housing 48 containing annular air manifold 28. Base 44 is secured to housing 48 via bolts 45. Air enters housing 48 via fitting 47. A gas director plate 24 mates against housing 48 such that passages 26 are in communication with manifold 28. Plate 24 forms an end of a cylindrical vaporizing chamber 12 and is sealed thereupon by gasket 51. Chamber 12 is attached to a plenum 50 receivable of a gas-permeable mixing foam element 52 in known fashion. A spark igniter 54 may be mounted with entrance into plenum 50 for igniting the fuel/air mixture upon reformer startup to provide hot combustion products to rapidly heat the reformer to temperature suitable for steady-state catalysis of the mixture. Clamps 56 are provided for attaching assembly 42 to the reformer. The assembly is bound together by bolts 58 which thread into threaded ears 60 on chamber 12.

In a currently preferred embodiment of the invention, air 25 entering manifold housing 48 is preheated such that fuel 20 dispensed as conical spray 22 in mixing zone 40 is vaporized virtually instantaneously upon combination with hot air 25'.

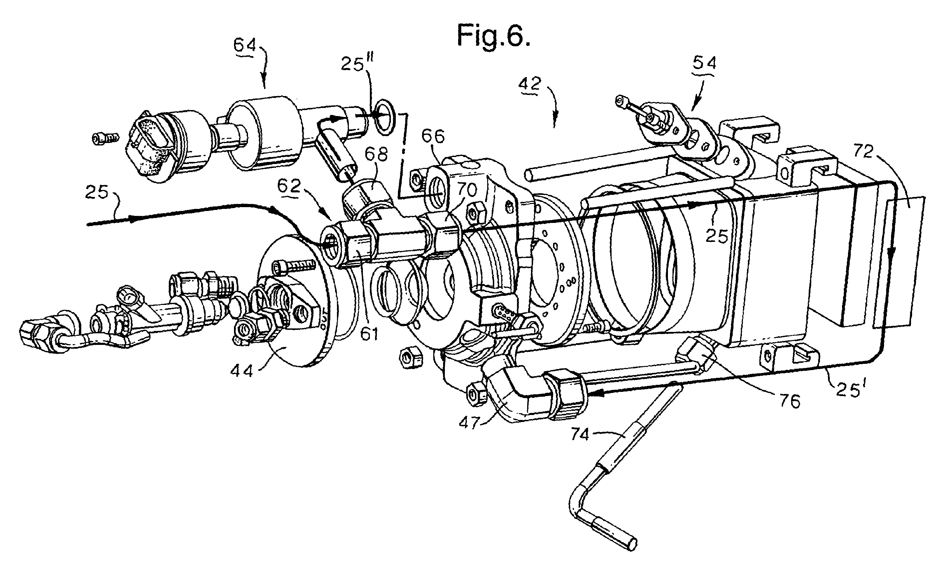

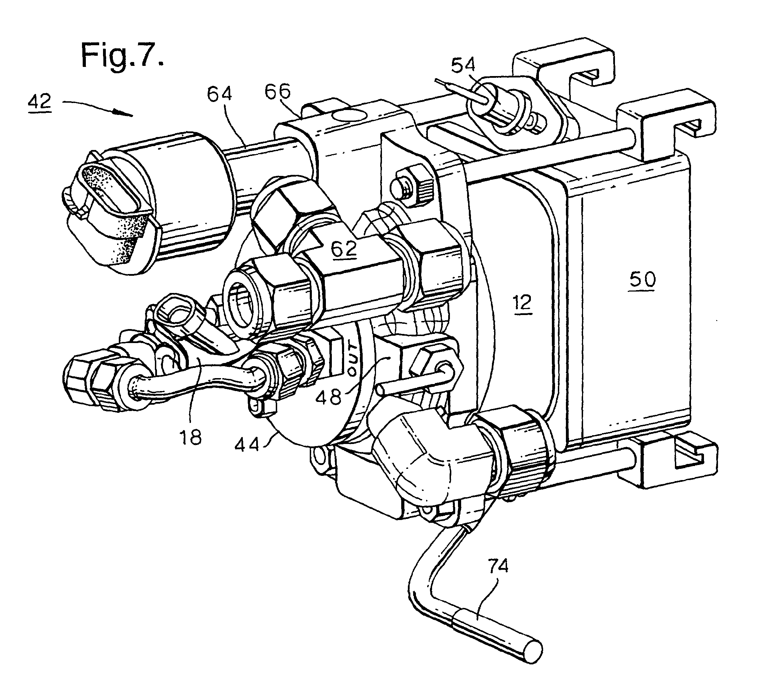

Referring to FIGS. 1, 6, and 7, ambient temperature air 25 is supplied to an inlet leg 61 of a T-fitting 62 wherein the air flow may be divided. A bypass air control valve assembly 64 is disposed in a bypass port 66 formed in housing 48 and is connected to a first outlet leg 68 of T-fitting 62. A second outlet leg 70 of T-fitting 62 is connected via tubing (omitted for clarity) to a heat exchanger 72, for example, a heat exchanger for heating the air being supplied with fuel/air mixture by non-contact vaporization assembly 42. Heated air 25' flows back via tubing (not shown) and enters fitting 47 for use in the vaporizer. The flow volume of air through heat exchanger 72 is regulated complementarily by bypass valve assembly 64, and the valve action may be controlled in known fashion in response to temperature in manifold housing 48 as determined by a temperature probe 74.

A gas director plate in accordance with the invention may be configured to supply more than one gas to vaporizing chamber 12. Referring to FIGS. 8 and 9, a second embodiment 24' of a director plate arrangement can distribute both a first gas such as air 25 through first manifold 28 and a second gas 78 through a second concentric manifold 80. Preferably, manifolds 28 and 80 are interlocking as shown in FIG. 9 such that eight alternate passages 26a carry first gas 25 and eight alternate passages 26b carry second gas 78. In an application such as vaporizing fuel for a reformer, providing a second gas can be extremely desirable. Such second gas may be, for example, steam, which can participate in known fashion in the catalytic decomposition of hydrocarbons; or the second gas may be, for another example, spent reformate from the anodes of a fuel cell stack, which serves to recycle combustion water and unconsumed hydrogen.

While the invention has been described by reference to various specific embodiments, it should be understood that numerous changes may be made within the spirit and scope of the inventive concepts described. Accordingly, it is intended that the invention not be limited to the described embodiments, but will have full scope defined by the language of the following claims.

## Claims

1. A non-contacting fuel vaporizer, comprising:
a) a housing enclosing a vaporization chamber having walls;
b) fuel injecting means adjacent said chamber for injecting fuel into said chamber; and
c) air injecting means adjacent said chamber for injecting air into said chamber between said injected fuel and said chamber walls to shield said fuel from contact with said walls.

2. A vaporizer in accordance with Claim 1 wherein said fuel injecting means includes a solenoid-actuated fuel injector.

3. A vaporizer in accordance with Claim 2 wherein said fuel injector is disposed axially of said chamber.

4. A vaporizer in accordance with Claim 1 wherein said injected fuel is an atomized spray.

5. A vaporizer in accordance with Claim 1 wherein said air injecting means includes a director plate having a plurality of passages therethrough for conveying gas from a first manifold into said chamber in the form of a plurality of directed gas jets.

6. A vaporizer in accordance with Claim 5 wherein said director plate has a plate axis, and wherein each of said passages has a passage axis, and wherein at least one of said passage axes is non-parallel to said plate axis.

7. A vaporizer in accordance with Claim 6 wherein all of said passage axes are non-parallel to said plate axis such that gas exiting said passages proceeds in a helical trajectory through said chamber.

8. A vaporizer in accordance with Claim 6 wherein said gas jets join within said chamber to form a gas curtain between said injected fuel and said chamber walls.

9. A vaporizer in accordance with Claim 8 wherein said gas curtain engages said injected fuel to form a mixing zone therebetween for mixing together said gas and said fuel and for vaporizing said injected fuel.

10. A vaporizer in accordance with Claim 6 further comprising a second gas manifold for conveying a second gas to said director plate wherein said first gas manifold communicates with a first set of passages of said plurality of passages and said second gas manifold communicates with a second set of passages of said plurality of passages.

11. A vaporizer in accordance with Claim 1 wherein said injected air is at a temperature above ambient.

12. A vaporizer in accordance with Claim 1 wherein said air is passed through a heat exchanger prior to being injected into said chamber.

13. A vaporizer assembly for providing heat to a reformer in a fuel cell system, said vaporizer assembly comprising:
a) a fuel vaporizer; and
b) combustion plenum in fluid communication with said fuel vaporizer, said plenum including an igniter, wherein an air/fuel mixture received from said vaporizer is ignited by said igniter and is used to heat said reformer during reformer start-up.

14. A method for non-contact vaporization of fuel injected into a vaporization chamber having walls, comprising the steps of:
a) injecting said fuel in an atomized spray axially of said chamber; and
b) providing a curtain of air into said chamber between said atomized spray and said walls.

15. A method in accordance with Claim 14 comprising the further step of heating said air prior to providing said air into said chamber.

16. A method in accordance with Claim 14 wherein said chamber is cylindrical and said curtain is cylindrical.

17. A method in accordance with Claim 16 wherein flow of said curtain through said chamber is helical.
